(19) Europäisches Patentamt / European Patent Office / Office européen des brevets

(11) **EP 3 805 544 A1**

(12) **DEMANDE DE BREVET EUROPEEN**

(43) Date de publication:
14.04.2021 Bulletin 2021/15

(21) Numéro de dépôt: 20197377.3

(22) Date de dépôt: 22.09.2020

(51) Int Cl.:
*F02D 41/18* (2006.01)  *F02B 37/18* (2006.01)
*F02M 26/06* (2016.01)  *F02D 37/02* (2006.01)
*F02P 5/04* (2006.01)  *F02P 5/15* (2006.01)
*F02D 21/08* (2006.01)  *F02D 23/02* (2006.01)
*F02D 33/02* (2006.01)  *F02D 41/14* (2006.01)

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 07.10.2019 FR 1911058

(71) Demandeur: **Renault S.A.S.**
**92100 Boulogne-Billancourt (FR)**

(72) Inventeurs:
• **COLLET, Alexandre**
**91780 CHALO SAINT MARS (FR)**
• **LOMBARDIN, Jacques-Olivier**
**91600 SAVIGNY SUR ORGE (FR)**
• **SERRA, Bruno**
**91150 ETAMPES (FR)**

(54) **CONTROLE D'UN MOTEUR À ALLUMAGE COMMANDE SURALIMENTÉ AVEC RECIRCULATION DES GAZ D'ECHAPPEMENT À BASSE PRESSION**

(57) L'invention concerne un procédé de contrôle d'un dispositif de motorisation d'un véhicule automobile comprenant un moteur (1) à combustion interne à allumage commandé du type suralimenté par turbocompresseur (6), ledit moteur étant associé à au moins un circuit de recirculation des gaz d'échappement. On détermine une consigne de débit total ($Q_{mot,sp}$) des gaz d'admission du moteur à partir d'une consigne de débit d'air ($Q_{air,sp}$) et d'une consigne de taux de gaz d'échappement recyclés ($\tau_{egr,sp}$). Le débit total ($Q_{mot}$) est réglé sur sa consigne en ajustant l'ouverture d'un boîtier-papillon et/ou d'une vanne de décharge à l'échappement de la turbine du turbocompresseur. Un débit d'air ($Q_{air}$) est réglé en boucle fermé sur sa consigne ($Q_{air,sp}$) en ajustant l'ouverture d'une vanne EGR.

[Fig.5]

EP 3 805 544 A1

**Description**

**Domaine technique de l'invention**

La présente invention concerne un procédé de contrôle d'un moteur à combustion interne du type à allumage commandé (fonctionnant notamment à l'essence), suralimenté, et associé par ailleurs à au moins un circuit de recirculation partielle à basse pression des gaz d'échappement à l'admission du moteur. Elle concerne également un dispositif de motorisation pour la mise en œuvre d'un tel procédé. Elle trouve une application avantageuse dans le domaine de l'automobile.

**Etat de la technique**

Les moteurs à allumage commandé suralimentés par turbocompresseur sont de plus en plus équipés d'au moins un circuit de recirculation partielle à basse pression des gaz d'échappement à l'admission du moteur. Dans un tel circuit, dit aussi circuit EGR LP (de l'acronyme anglais pour : Exhaust Gas Recycling - Low Pressure), un conduit prélève une partie des gaz de combustion dans le circuit d'échappement du moteur en un point situé en aval de la turbine du turbocompresseur de suralimentation, le plus souvent après au moins un dispositif de dépollution des gaz, et les renvoie dans le circuit d'admission en un point situé en amont du compresseur du turbocompresseur.

L'intérêt d'un tel circuit EGR LP, qui est déjà bien connu et très largement utilisé sur les moteurs de type diesel pour diminuer les émissions d'oxydes d'azote, est sur les moteurs du type à allumage commandé de diminuer notamment la consommation de carburant et les émissions polluantes de ces moteurs. En effet, il est bien connu que sur ces moteurs qui fonctionnent le plus souvent à richesse 1, c'est-à-dire dans des proportions stœchiométriques du mélange air/carburant, il n'est généralement pas possible de maintenir ce réglage sur des points de fonctionnement particuliers, par exemple voisins de la pleine charge, pour lesquels la température à l'échappement, notamment la température avant la turbine TAVT, est très élevée.

Dans un moteur à allumage commandé (notamment à essence) traditionnel, c'est-à-dire sans circuit EGR LP, il est souvent nécessaire d'augmenter considérablement la richesse du mélange air/carburant pour maintenir la température à l'échappement dans des limites compatibles avec la tenue mécanique des composants qui constituent le circuit d'échappement du moteur (typiquement : de l'ordre de 950° à 980°C en ce qui concerne la turbine du turbocompresseur). Cela entraîne une consommation élevée de carburant, et conduit à rejeter à l'échappement du véhicule un excédent de carburant non brûlé dans les chambres de combustion du moteur, qui est très polluant pour l'environnement.

Un circuit EGR LP permet d'ajouter une quantité de gaz neutres (i.e. : ne participant pas à la combustion) et relativement froids dans les chambres de combustion du moteur, en plus de la quantité d'air frais qui y est introduite pour brûler le carburant et produire le couple requis par le conducteur du véhicule. Cet ajout de gaz d'échappement recyclés permet alors de maîtriser la température à l'échappement sans augmenter les quantités de carburant injectées sur certains points de fonctionnement du moteur, donc sans augmenter la consommation de carburant.

D'autre part, les gaz d'échappement recyclés à l'admission sont bien connus pour leurs propriétés anti-détonnantes. Ils permettent d'une manière générale d'augmenter la garde au cliquetis du mélange air-carburant dans les moteurs à combustion interne et de modifier un certain nombre de paramètres de fonctionnement du moteur tout en conservant les mêmes performances, par rapport à un moteur sans recirculation des gaz d'échappement à l'admission. On peut notamment augmenter l'avance à l'allumage, ce qui permet, pour une valeur de couple à produire donnée, de limiter la quantité de carburant à fournir au moteur.

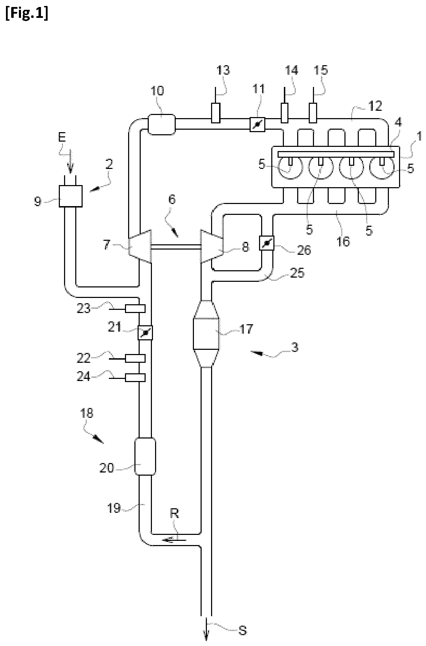

Un exemple de dispositif de motorisation embarquant un circuit EGR LP est décrit sur la figure 1 à l'appui de son procédé d'utilisation. Le dispositif comprend un moteur 1 à combustion interne du type à allumage commandé, qui se présente dans cet exemple sous la forme d'un moteur à quatre cylindres en ligne. Il est associé à un circuit d'admission d'air 2 et à un circuit d'échappement 3 des gaz de combustion. Il est aussi associé à un circuit d'alimentation en carburant (non représenté en totalité), par exemple en essence, en alcool ou en gaz, comprenant par exemple une rampe 4 commune d'alimentation desservant une pluralité d'injecteurs 5. Ici on a représenté quatre injecteurs, qui alimentent chacun un des quatre cylindres du moteur.

Le moteur est du type suralimenté par un turbocompresseur 7 qui comporte un compresseur 7 monté dans le circuit d'admission en air 2 et une turbine 8 montée dans le circuit d'échappement 3. Le compresseur 7 et la turbine 8 sont montés sur un arbre commun. La turbine 8 peut être du type à géométrie fixe et être associée à un circuit de décharge à l'échappement équipée d'une vanne de décharge à l'échappement (vanne dite « waste gate »), mais il pourrait aussi s'agir, si la température le permettait, d'une turbine à géométrie variable. De même, le compresseur 7 peut être associé à un circuit de décharge à l'admission (non représenté) équipé d'une vanne de décharge à l'admission (vanne dite « pop off »).

L'air frais prélevé dans l'atmosphère extérieure pénètre dans le circuit d'admission 2 dans le sens de la flèche E, et les gaz de combustion sont évacués dans l'atmosphère extérieure par le circuit d'échappement 3 dans le sens de la flèche S:

Le circuit d'admission 2 peut comporter d'amont en aval, dans le sens de circulation de l'air : un filtre à air 9 ; le compresseur 7 du turbocompresseur 6 ; un refroidisseur d'air suralimenté 10; un boîtier-papillon 11 ; et, un répartiteur 12, ou collecteur d'échappement du moteur. Selon l'état de la technique, le circuit d'admission peut comprendre en outre pour le contrôle du moteur: un capteur 13 de pression de suralimentation Psural, qui est monté entre le refroidisseur 10 et le boîtier-papillon 11 ; un capteur 14 de pression Pcoll régnant dans le collecteur d'admission 12 ; et, un capteur 15 de température Tcoll de collecteur d'admission. Le mode de contrôle sera détaillé plus bas.

Le circuit d'échappement 3 peut comporter d'amont en aval, dans le sens de circulation des gaz de combustion du moteur: un collecteur d'échappement 16 du moteur ; la turbine 8 du turbocompresseur 6 ; et, au moins un dispositif de dépollution 17 des gaz de combustion du moteur, notamment un catalyseur trois voies. Il comporte en outre un circuit de recirculation 18 partielle à basse pression des gaz d'échappement à l'admission du moteur (circuit EGR LP). Ce circuit comprend un conduit EGR 19 qui prélève une partie des gaz de combustion du moteur en un point du circuit d'échappement situé en aval de la turbine 8, ici après la sortie du dispositif de dépollution 17, et qui les renvoie en un point du circuit d'admission 2 situé en amont du compresseur 7. Les gaz recyclés circulent dans le conduit EGR dans le sens de la flèche R. Le circuit EGR LP 18 comprend d'amont en aval, dans le sens de circulation des gaz recyclés : un refroidisseur 20 des gaz recyclés ; et, une vanne 21 de réglage de la quantité de gaz recyclés, dite vanne EGR 21. Selon l'état de la technique, le circuit EGR comprend pour le contrôle du moteur : un capteur 22 de pression apte à mesurer une valeur de la pression Pam en amont de la vanne EGR 22 ; un capteur 23 de pression apte à mesurer une valeur de la pression Pav en aval de la vanne EGR 22 ; et, un capteur de température 24 apte à mesurer une valeur de la température Tegr en amont de la vanne EGR 24, plus précisément une température des gaz recyclés refroidis par le refroidisseur 20.

La turbine 8 du turbocompresseur 6 et le compresseur 7 sont montés sur un arbre commun. De manière connue en soi, la turbine 8 prélève de l'énergie sur les gaz d'échappement qui la traversent en les détendant, et elle transfère cette énergie par l'intermédiaire de l'arbre commun au compresseur 7 pour la compression des gaz d'admission du moteur (air frais et gaz d'échappement recyclés) qui le traversent. Pour ajuster l'énergie prélevée sur les gaz d'échappement et régler ainsi la pression de suralimentation Psural, la turbine 8 est ici associée à un circuit de décharge à l'échappement 25 qui permettent aux gaz d'échappement issus du collecteur d'échappement 16 d'être évacués à l'échappement en contournant la turbine. Ce circuit de décharge 25 muni d'une vanne de décharge à l'échappement 26, dite aussi vanne « waste gate » selon sa dénomination anglaise, dont le degré d'ouverture plus ou moins grand permet de régler la proportion des gaz d'échappement traversant la turbine.

Le fonctionnement d'un tel dispositif de motorisation, qui est contrôlé par un calculateur (non représenté) du moteur, est le suivant : En fonction du régime N du moteur et d'une consigne de couple Csp établie en fonction de l'enfoncement E de la pédale d'accélérateur du véhicule par un conducteur et de la vitesse V du véhicule ou du régime N du moteur, le calculateur détermine une consigne de débit d'air frais Qair,sp pour la production du couple et une consigne de débit de gaz recyclés Qegr,sp , ou de manière équivalente, une consigne de taux de gaz recyclés τegr,sp qui est égale au rapport de la consigne de débit de gaz recyclés Qegr,sp divisée par la somme de la consigne de débit d'air Qair,sp et de la consigne de débit de gaz recyclés Qegr,sp. Selon l'état de la technique, comme la valeur de consigne de débit de gaz recyclés Qegr,sp ,ou la valeur du taux équivalente, est une fonction du régime moteur N et de la consigne de couple Csp, on peut dire qu'elle est de manière équivalente une fonction de la consigne de débit d'air frais Qair,sp et ne dépend pas d'une quelconque valeur mesurée (réelle) dudit débit d'air.

On déduit de ces consignes une consigne de débit total des gaz admis dans le moteur Qmot,sp, qui est égale à la somme des consignes de débit d'air Qair,sp et de gaz recyclés Qegr,sp.

Le calculateur détermine en outre une valeur de consigne de quantité de carburant Qcarb,sp à injecter dans le moteur pour la production du couple, compte tenu du taux de gaz d'échappement recyclés τegr,sp qui est prévu, ainsi que d'autres valeurs de paramètres de fonctionnement du moteur comme l'avance à l'allumage AA.

Selon l'état de la technique, on règle alors d'une part le débit total de gaz admis Qmot et d'autre part le débit de gaz recyclés Qegr autour de leurs consignes respectives Qmot,sp , Qegr,sp.

Le boîtier-papillon 11 permet, selon son degré d'ouverture abp plus ou moins important, et le cas échéant en combinaison avec le degré d'ouverture awg de la vanne de décharge à l'échappement 26, de régler le débit total de gaz d'admission Qmot entrant dans le moteur. Ce débit est la somme d'un débit d'air frais Qair provenant du filtre à air neuf et d'un débit de gaz d'échappement recyclés Qegr provenant du circuit EGR-LP 18. La vanne EGR 21 permet, selon son degré d'ouverture, de régler le seul débit des gaz recyclés Qegr. Le débit d'air frais Qair est alors obtenu uniquement de manière indirecte, comme la différence entre le débit total des gaz d'admission Qmot et du débit total des gaz recyclés Qegr.

Plus précisément, en ce qui concerne le débit total des gaz d'admission Qmot dans le moteur, le procédé de réglage peut être le suivant :

En phase non suralimentée, c'est-à-dire sur les points de fonctionnement régime-charge du moteur qui ne nécessitent pas de comprimer les gaz d'admission pour obtenir un débit massique suffisant, le débit total Qmot est réglé en boucle ouverte en ajustant l'ouverture abp du boîtier-papillon 11 sur une valeur qui est déterminée en fonction d'une valeur de la pression Pcoll et de la température Tcoll régnant dans le répartiteur 12 du moteur, du régime moteur N et d'une valeur de rendement de remplissage du moteur ηrempl. Par rendement de remplissage du moteur, on entend de manière connue en soi le rapport entre le volume de gaz réellement admis dans les cylindres du moteur, divisé par le volume théoriquement admissible. Le modèle peut être établi par des essais préalables. La turbine est 8 est inactive, la vanne de contournement à l'échappement 26 est grande ouverte.

En phase suralimentée, c'est-à-dire sur les points de fonctionnement régime-charge du moteur qui nécessitent de comprimer les gaz d'admission pour obtenir un débit massique suffisant, notamment sur les points de fonctionnement proches de la pleine charge correspondant par exemple au cas où la pédale d'accélérateur du véhicule est complètement enfoncée (cas d'un « pied à fond »), on peut par exemple forcer l'ouverture du boîtier-papillon 11 sur sa position de pleine ouverture et régler la pression de suralimentation Psural en boucle fermée sur une valeur de consigne, qui correspond à une valeur de débit total Qmot en fonctionnement stabilisé prédéterminée, en ajustant l'angle d'ouverture awg de la vanne de décharge à l'échappement 26. En variante on peut aussi laisser le boîtier-papillon réglé sur une position qui correspond à sa position précédant le pied à fond et régler la pression de suralimentation sur une autre valeur. Dans cette variante, la moindre ouverture du boîtier-papillon est compensée par une plus forte augmentation de la pression de suralimentation.

Plus précisément également, en ce qui concerne le débit des gaz recyclés Qegr, le procédé de réglage peut consister en un réglage en boucle fermé d'une valeur calculée de débit Qegr sur une valeur de consigne, en ajustant l'angle d'ouverture aegr de la vanne EGR 21. La détermination de la valeur du débit des gaz recyclés Qegr se fait, selon l'état de la technique, en se basant sur l'équation de débit dite de Barré Saint Venant, qui relie les conditions de pression Pam et de température Tegr en amont de la vanne EGR 21 avec la section efficace Se de passage des gaz dans la vanne et les conditions de pression Pav en aval de la vanne, selon la formule suivante :

$$Qegr = [(Pam * Se)/Tam^{\frac{1}{2}}] * Cfe_{BSV} (Pav/Pam)$$

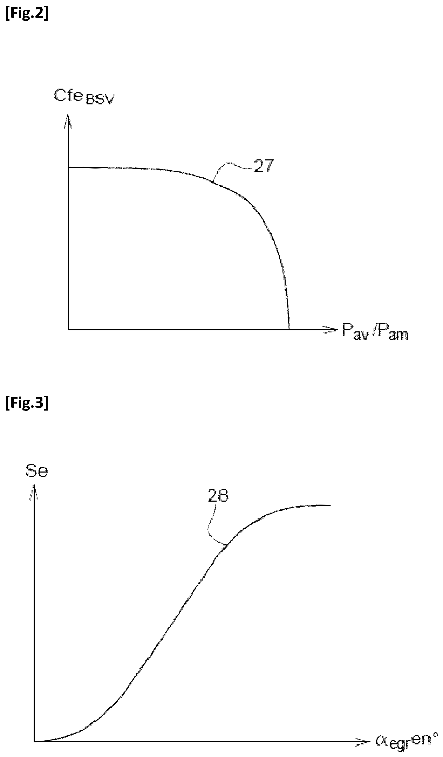

La valeur de la fonction $Cfe_{BSV}$ est obtenue par la courbe 27 représentée sur la figure 2. Elle est une fonction du rapport de la pression aval Pav et amont Pam aux bornes de la vanne EGR 21.

L'application de l'équation de débit de Barré Saint Venant pour obtenir le débit des gaz d'échappement recyclés dépend de la section efficace débitante Se de la vanne EGR 21. Cette section efficace est obtenue à partir d'une courbe 28 représentée sur la figure 3, la reliant à la mesure de l'angle d'ouverture aegr de la vanne, mesuré par exemple en degrés et connu. Cette courbe est appelée courbe aéraulique de la vanne EGR 21.

Lorsque le débit total des gaz pénétrant dans le moteur Qmot et le débit de gaz recyclés Qegr sont réglés, le débit d'air frais Qair s'en déduit par différence, selon la formule suivante :

$$Qair = Qmot - Qegr$$

On comprend de ce qui précède que le débit d'air frais n'est à aucun moment réglé de manière directe, mais que la valeur obtenue est la simple conséquence des réglages respectifs du débit total et du débit des gaz recyclés.

On comprend aussi que, étant donné que l'application de l'équation de débit de Barré Saint Venant dépend grandement de la section efficace, toute modification de la courbe aéraulique réelle par rapport à celle qui est prise en compte dans le procédé de réglage du débit des gaz recyclés entraîne une mauvaise estimation dudit débit Qegr et une régulation en boucle fermée dudit débit Qegr sur une valeur cible qui est biaisée, et elle fausse de manière indirecte la valeur du débit d'air Qair admis dans le moteur.

La courbe aéraulique évolue notamment sous l'effet du vieillissement et de l'encrassement de la vanne EGR 21 par les hydrocarbures imbrûlés contenus dans les gaz d'échappement recyclés. Par exemple, une erreur de plus ou moins 10% sur le débit des gaz recyclés peut entraîner, pour un taux de gaz EGR maximal de 20%, une erreur de plus ou moins 2% sur le débit d'air frais, ce qui est excessif pour l'atteinte des performances, de la dépollution et de la consommation de carburant du moteur.

On connaît de l'état de la technique des procédés de contrôle qui visent à améliorer la précision du réglage d'une quantité de gaz recyclés dans un moteur à combustion interne. Par exemple, la publication FR-A1-2939475 divulgue un procédé de traitement anti-pollution des gaz d'échappement générés par un groupe motopropulseur d'un véhicule automobile, comprenant une phase de recirculation vers l'admission du moteur d'une partie des gaz d'échappement, caractérisé en ce qu'il comprend les étapes suivantes :

- mesure d'une grandeur de fonctionnement du groupe motopropulseur du véhicule automobile ;

- estimation par un calculateur de cette même grandeur de fonctionnement du groupe motopropulseur du véhicule automobile ;

- déduction d'une correction de la courbe aéraulique de la vanne en recirculation dépendant de la différence entre les valeurs mesurée et estimée de la grandeur de fonctionnement du groupe motopropulseur du véhicule.

Un tel procédé permet de corriger la valeur du débit des gaz recyclés Qegr à chaque fois qu'il est mis en œuvre. Toutefois, entre deux itérations, sous l'effet notamment de l'encrassement de la vanne, la valeur réelle du débit dérive à nouveau progressivement. Le débit d'air frais est donc faussé, et l'erreur n'est pas constante de sorte que des correctifs simples ne peuvent pas être apportés au fonctionnement du moteur.

## Présentation de l'invention

L'invention propose de remédier de manière efficace aux défauts des procédés de contrôle connus des moteurs à allumage commandé suralimentés avec recirculation partielle à basse pression des gaz d'échappement à l'admission. Elle propose pour cela un procédé de contrôle d'un dispositif de motorisation d'un véhicule automobile comprenant un moteur à combustion interne à allumage commandé du type suralimenté par turbocompresseur, ledit moteur étant associé à au moins un circuit de recirculation partielle à basse pression apte à prélever une partie des gaz d'échappement du moteur en un point du circuit d'échappement du moteur situé en aval de la turbine du turbocompresseur et à les réintroduire en un point du circuit d'admission du moteur situé en amont du compresseur, ledit procédé comprenant :

- une étape de détermination d'une consigne de débit d'air à partir d'une valeur de régime du moteur et d'une consigne de couple moteur,

- une étape de détermination d'une consigne de taux de gaz d'échappement recyclés à l'admission,

- une étape de détermination d'une consigne de débit total de gaz d'admission dans le moteur,

- au moins une étape de réglage d'un actionneur du moteur apte à régler le débit total de gaz d'admission dans le moteur sur ladite valeur de consigne de débit total.

Les principales caractéristiques du procédé selon l'invention sont que :

- ladite consigne de taux de gaz recyclés est déterminée en fonction d'une valeur mesurée du débit d'air et du régime du moteur,

- ladite consigne de débit total des gaz d'admission dans le moteur est déterminée en fonction de ladite consigne dé débit d'air et de ladite consigne de taux qui est déterminée en fonction de ladite valeur mesurée du débit d'air et du régime du moteur, et

- le procédé comprend une étape de réglage du débit d'air en boucle fermée sur sa consigne en ajustant la position d'un actionneur du moteur.

## Brève description des figures

D'autres caractéristiques et avantages de l'invention apparaîtront à la lecture de la description qui suit d'un mode particulier de réalisation de l'invention donné à titre d'exemple non limitatif et représenté sur les dessins annexés, dans lesquels :

[Fig. 1] est une vue schématique illustrant un dispositif de motorisation selon l'état de la technique, pour la mise en œuvre d'un procédé de contrôle selon l'état de la technique.

[Fig. 2] représente schématiquement la courbe de la fonction mise en œuvre dans l'équation de débit dite de Barré Saint Venant.

[Fig. 3] représente schématiquement la courbe aéraulique d'une vanne de recirculation partielle à l'admission des gaz d'échappement dans un dispositif de motorisation conforme à la figure 1.

[Fig. 4] est une vue schématique illustrant un dispositif de motorisation pour la mise en œuvre du procédé selon l'invention.

[Fig. 5] est une est un logigramme illustrant les différentes étapes d'un procédé de contrôle selon un mode de réalisation de l'invention.

## Description détaillée des figures

Les figures 1 à 3 ont déjà été décrites plus haut et n'appellent pas d'autres compléments de description.

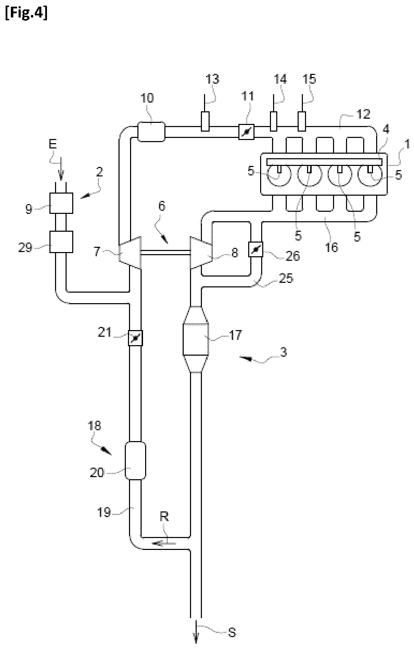

Sur la figure 4, on a représenté un dispositif de motorisation 1 apte à la mise en œuvre du procédé selon l'invention, qui équipe notamment un véhicule automobile.Le dispositif selon l'invention est semblable, aux deux points suivants près, au dispositif de la figure 1, et les mêmes références représentent les mêmes pièces qui sont communes aux deux dispositifs.

Cependant, dans le cadre de l'invention, le dispositif de motorisation comprend des moyens de mesure 29 du débit d'air Qair pénétrant dans le moteur, par exemple un débitmètre 29 massique à fil chaud.

D'autre part, dans le cadre de l'invention, il n'est pas nécessaire que la vanne EGR 21 soit associée à des moyens de mesure 22,23 de la pression amont Pam et de la pression aval Pav, ni à des moyens de mesure 24 de la température des gaz recyclés Tegr en amont de ladite vanne. Avantageusement on peut faire l'économie de tels moyens.

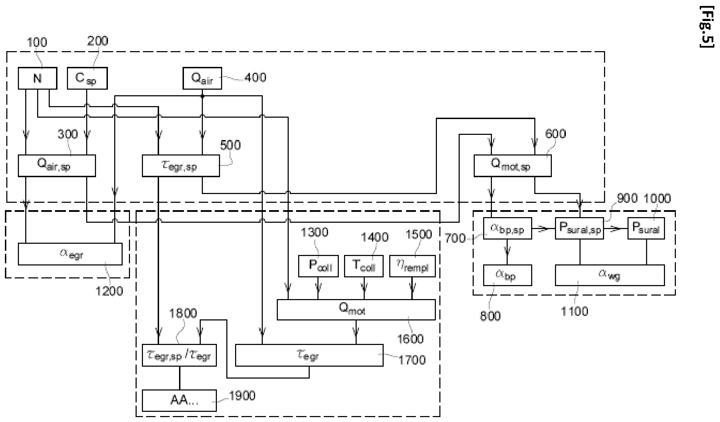

La figure 5 est un logigramme qui illustre de manière schématique les différentes étapes du procédé de contrôle selon l'invention, dans un mode de réalisation de celle-ci. Ces différentes étapes se déroulent de manière itérative pendant toute la durée de fonctionnement du moteur. On peut distinguer sur la figure 5 quatre groupes d'étapes délimités par des pointillés, qui sont mises en œuvre par le calculateur du moteur :
Dans une première série d'étapes comprenant les étapes 100 à 500, on détermine un ensemble de consignes de paramètres de fonctionnement du moteur, à savoir une consigne de débit d'air Qair,sp , une consigne de taux de gaz recyclés $\tau$egr,sp, et une consigne de débit total de gaz d'admission dans le moteur Qmot,sp.

Dans une deuxième série d'étapes comprenant les étapes 700 à 1000, on règle au moins un actionneur du moteur pour atteindre la consigne de débit total Qmot,sp.

Dans une troisième série d'étapes comprenant l'étape 1200, on règle un actionneur du moteur pour atteindre la consigne de débit d'air Qair,sp.

Dans une quatrième série d'étapes comprenant les étapes 1300 à 1900, on règle d'autres paramètres de fonctionnement du moteur en fonction d'un ratio de taux de gaz recyclés.

On détaille maintenant les différentes étapes du procédé.

Le procédé comprend une étape 100 dans laquelle on détermine une valeur du régime N du moteur, et une étape 200 dans laquelle on détermine une valeur de couple de consigne Csp à fournir par le moteur. Par exemple, le régime peut provenir d'un capteur monté en bout de vilebrequin du moteur. Par exemple, la consigne de couple peut être déduite d'une valeur de l'enfoncement E de la pédale d'accélérateur du véhicul par le conducteur et de la valeur du régime N.

Le procédé comprend ensuite une étape 300 de détermination d'une première valeur de consigne, qui est une consigne de débit d'air Qair,sp à fournir au moteur, en fonction du régime N et de la consigne de couple Csp.

Le procédé comprend une étape 400 de détermination du débit d'air Qair entrant dans le moteur. Par exemple, il s'agit d'une mesure provenant du débitmètre 29. Le procédé se poursuit par une étape 500 de détermination d'une deuxième valeur de consigne, qui est une consigne de taux $\tau$egr,sp de gaz d'échappement recyclés à l'échappement . Selon l'invention, cette consigne est déterminée en fonction du régime et de la valeur mesurée du débit d'air Qair et non pas en fonction d'une valeur de consigne de débit d'air comme c'est le cas dans les procédés connus.

Le procédé comprend une étape 600 de détermination d'une troisième consigne, qui est une consigne de débit d'air total Qmot,sp des gaz d'admission pénétrant dans le moteur, à partir des deux consignes précédentes, respectivement la consigne de débit d'air Qair,sp et la consigne de taux de gaz recyclés $\tau$egr,sp. On applique la formule suivante pour déduire cette troisième consigne :

$$Qmot,sp = Qair,sp / (1 - \tau egr,sp)$$

Le procédé comprend un ensemble d'étapes de réglage d'au moins un actionneur du moteur pour ajuster le débit total Qmot sur sa consigne Qmot,sp, conformément au procédé de l'état de la technique qui a déjà été exposé plus haut : Le procédé comprend une étape 700 de détermination d'une valeur de consigne de l'angle d'ouverture abp,sp du boîtier-papillon 11, puis une étape de réglage en boucle ouverte 800 de l'angle d'ouverture abp sur cette consigne. En outre, notamment dans le domaine suralimenté, le procédé peut comprendre une étape de détermination 900 d'une consigne de pression de suralimentation Psural,sp , qui peut dépendre de la consigne de l'angle d'ouverture abp,sp du boîtier-papillon. Il peut comprendre en outre une étape de mesure 1000 de la valeur de la pression de suralimentation Psural. Il peut encore comprendre une étape de régulation en boucle fermée de la pression de suralimentation autour de sa consigne, en ajustant l'angle d'ouverture awg de la vanne de décharge à l'échappement 26.

Le procédé comprend un ensemble d'étapes de réglage d'au moins un actionneur du moteur pour ajuster le débit d'air Qair en boucle fermée autour de sa consigne. Cet ensemble consiste ici en une étape unique 1200 de réglage de l'angle d'ouverture aegr de la vanne EGR. En variante non représentée, selon les conditions de pression régnant aux extrémités du circuit EGR, il est possible de régler l'angle d'ouverture d'une vanne d'admission d'air (non représentée sur la figure 4) montée dans le circuit d'admission d'air en aval du débitmètre, avant le point de réintroduction des gaz recyclés.

Le procédé comprend enfin avantageusement un ensemble d'étapes de réglage d'autres paramètres de fonctionnement du moteur à partir d'un ratio de taux de gaz recyclés. Plus précisément, le procédé comprend une étape 1300 de détermination de la pression Pcoll régnant dans le répartiteur; une étape 1400 de détermination de la température Tcoll régnant dans le répartiteur; et, une étape 1500 de détermination du rendement de remplissage ηrempl.

Le procédé comprend ensuite une étape 1600 d'estimation du débit total Qmot des gaz d'admission pénétrant dans le moteur, à partir desdites valeurs de pression Pcoll, de température Tcoll et de rendement de remplissage ηrempl ainsi que du régime N.

Le procédé comprend une étape 1700 de calcul du taux de gaz recyclés τegr à partir du débit total Qmot calculé à l'étape 1600 et du débit d'air mesuré à l'étape 400. On applique pour cela la formule suivante :

$$\tau egr = (Qmot - Qair) / Qmot$$

Le procédé comprend ensuite une étape 1800 de calcul d'un ratio de taux de gaz recyclés, qui est défini comme le rapport entre la valeur cible du taux de gaz recyclés τegr,sp définie à l'étape 500, divisée par le taux de gaz recyclés τegr calculé à l'étape 1700.

Le procédé comprend ensuite une étape de réglage d'au moins un actionneur du moteur afin d'ajuster d'autres paramètres de fonctionnement du moteur. Préférentiellement, on ajuste au moins l'avance à l'allumage AA du moteur en modifiant l'instant de jaillissement d'une étincelle aux bornes des bougies d'allumage. On peut ainsi optimiser le fonctionnement du moteur en tenant compte de la valeur réelle du taux de gaz recyclés, en maximisant le rendement de combustion sans prendre de risque d'apparition de cliquetis.

Le procédé selon l'invention présente de nombreux avantages par rapport aux procédés connus. Il permet une mesure directe et un réglage direct du seul débit d'air Qair pénétrant dans le moteur, ce qui améliore considérablement la précision de la charge d'air qui garantit l'obtention du couple. Le réglage du débit d'air se fait en s'affranchissant des variations de section efficace Se de la vanne EGR 21 qui perturbe la régulation de débit. En outre, on simplifie le système de contrôle en supprimant les capteurs de pression 22, 23 de gaz recyclés, et on gagne ainsi en fiabilité et en coût de fabrication. On s'affranchit aussi de contraintes d'écart de pression minimal aux bornes de la vanne EGR 21 permettant d'assurer une mesure correcte de débit.

**Revendications**

1. Procédé de contrôle d'un dispositif de motorisation d'un véhicule automobile comprenant un moteur (1) à combustion interne à allumage commandé du type suralimenté par turbocompresseur (6), ledit moteur étant associé à au moins un circuit de recirculation partielle à basse pression apte à prélever une partie des gaz d'échappement du moteur en un point du circuit d'échappement (3) du moteur situé en aval de la turbine () du turbocompresseur (8) et à les réintroduire en un point du circuit d'admission (2) du moteur situé en amont du compresseur (7) du turbocompresseur (6), ledit procédé comprenant

    - une étape de détermination (300) d'une consigne de débit d'air (Qair,sp) à partir d'une valeur de régime (N) du moteur et d'une de consigne de couple moteur (Csp) ;
    - une étape de détermination (500) d'une consigne de taux (τegr,sp) de gaz d'échappement recyclés à l'admission ;
    - une étape de détermination (600) d'une consigne de débit total (Qmot,sp) de gaz d'admission dans le moteur ;
    - au moins une étape de réglage (700,800,900,1000) d'un actionneur du moteur (11,26), apte à régler le débit total des gaz d'admission du moteur (Qmot) sur ladite valeur de consigne de débit total (Qmot,sp)
    **CARACTERISE EN CE QUE**
    - ladite consigne de taux (τegr,sp) de gaz recyclés est déterminée en fonction d'une valeur mesurée du débit d'air (Qair) et du régime (N) moteur ;

- ladite consigne de débit total (Qmot,sp) des gaz d'admission dans le moteur est déterminée en fonction de ladite consigne de débit d'air (Qair,sp) et de ladite consigne de taux (τegr,sp) déterminée en fonction de ladite valeur mesurée du débit d'air (Qair) et du régime (N) ; et,

- le procédé comprend une étape (1200) de réglage du débit d'air (Qair) en boucle fermée sur sa consigne (Qair,sp) en ajustant la position d'un actionneur (21) du moteur.

2. Procédé selon la revendication 1, dans lequel le débit d'air (Qair) est réglé en boucle fermée sur sa consigne (Qair,sp) en ajustant le degré d'ouverture d'une vanne EGR (21) montée dans le circuit de recirculation à basse pression du moteur.

3. Procédé selon la revendication1, dans lequel le débit d'air (Qair) est réglé en boucle fermée sur sa consigne (Qair,sp) en ajustant le degré d'ouverture d'une vanne d'admission d'air du moteur montée dans le circuit d'admission d'air (2) en un point situé en amont du point de réintroduction des gaz d'échappement recyclés.

4. Procédé selon l'une quelconque des revendications précédentes, dans lequel le débit total (Qmot) des gaz d'admission est réglé au moins en réglant l'angle d'ouverture (abp) d'un boitier-papillon (11) du moteur en boucle ouverte sur une consigne d'angle d'ouverture (abp,sp).

5. Procédé selon la revendication 5 dans lequel le débit total (Qmot) des gaz d'admission est réglé en réglant en outre la valeur de la pression de suralimentation (Psural) du moteur en boucle fermée autour d'une consigne (Psural,sp) de pression de suralimentation.

6. Procédé selon l'une quelconque des revendications précédentes, **caractérisé en ce qu'**il comprend une étape (1700) de détermination d'un taux (τegr) de gaz recyclés, une étape de détermination (1800) d'un ratio de taux de gaz recyclés, égal au rapport de la consigne de taux de gaz recyclés (τegr,sp) divisée par ledit taux (τegr) de gaz recyclés, et une étape de réglage d'au moins un paramètre de fonctionnement du moteur en fonction dudit ratio.

7. Procédé selon la revendication 6, dans lequel ledit paramètre de fonctionnement est l'avance à l'allumage (AA).

8. Dispositif de motorisation pour la mise en œuvre du procédé selon l'une quelconque des revendications précédentes, comportant un moteur (1) à combustion interne à allumage commandé du type suralimenté par turbocompresseur (6) associé à un circuit de recirculation partielle à basse pression des gaz d'échappement à l'admission du moteur, comprenant aumoins un actionneur (11,26) apte à régler le débit total (Qmot) des gaz d'admission du moteur sur une consigne (Qmot,sp), **caractérisé en ce qu'**il comprend des moyens (29) de mesure directe du débit d'air (Qair) entrant dans le moteur et au moins un actionneur du moteur apte et destiné à régler ledit débit d'air en boucle fermée autour d'une consigne (Qair,sp) de débit d'air.

[Fig.1]

[Fig.2]

[Fig.3]

[Fig.4]

[Fig.5]

**Europäisches Patentamt**
**European Patent Office**
**Office européen des brevets**

# RAPPORT DE RECHERCHE EUROPEENNE

Numéro de la demande

EP 20 19 7377

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 923 544 A1 (RENAULT SAS [FR]) 15 mai 2009 (2009-05-15) * page 10 - page 22; figures * ----- | 1-8 | INV. F02D41/18 F02B37/18 F02M26/06 |
| A | US 2014/251287 A1 (TAKEZOE HIROYUKI [JP]) 11 septembre 2014 (2014-09-11) * alinéa [0033] - alinéa [0038]; figures 1,3 * ----- | 1-8 | F02D37/02 F02P5/04 F02P5/15 F02D21/08 F02D23/02 |
| A | DE 10 2005 015609 A1 (SIEMENS AG [DE]) 19 octobre 2006 (2006-10-19) * alinéa [0033] - alinéa [0047]; figures 1,2 * ----- | 1-8 | F02D33/02 ADD. F02D41/14 |
| A | US 2008/078176 A1 (DE OJEDA WILLIAM [US]) 3 avril 2008 (2008-04-03) * alinéa [0039] - alinéa [0049]; figures 1,3 * ----- | 1-8 | |
| A | FR 2 944 317 A3 (RENAULT SAS [FR]) 15 octobre 2010 (2010-10-15) * page 7 - page 10; figures 3-5 * ----- | 1-8 | **DOMAINES TECHNIQUES RECHERCHES (IPC)** F02B F02M F02D F02P |

Le présent rapport a été établi pour toutes les revendications

| Lieu de la recherche | Date d'achèvement de la recherche | Examinateur |
|---|---|---|
| Munich | 28 octobre 2020 | Aign, Torsten |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 19 7377

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-10-2020

| Document brevet cité au rapport de recherche | | | Date de publication | Membre(s) de la famille de brevet(s) | | | Date de publication |
|---|---|---|---|---|---|---|---|
| FR | 2923544 | A1 | 15-05-2009 | AUCUN | | | |
| US | 2014251287 | A1 | 11-09-2014 | JP | 2014169684 | A | 18-09-2014 |
| | | | | US | 2014251287 | A1 | 11-09-2014 |
| DE | 102005015609 | A1 | 19-10-2006 | CN | 101107435 | A | 16-01-2008 |
| | | | | DE | 102005015609 | A1 | 19-10-2006 |
| | | | | EP | 1815117 | A1 | 08-08-2007 |
| | | | | US | 2008104957 | A1 | 08-05-2008 |
| | | | | WO | 2006106058 | A1 | 12-10-2006 |
| US | 2008078176 | A1 | 03-04-2008 | EP | 2102710 | A2 | 23-09-2009 |
| | | | | US | 2008078176 | A1 | 03-04-2008 |
| | | | | US | 2011079008 | A1 | 07-04-2011 |
| | | | | WO | 2008048998 | A2 | 24-04-2008 |
| FR | 2944317 | A3 | 15-10-2010 | AUCUN | | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2939475 A1